(19) Europäisches Patentamt
European Patent Office
Office européen des brevets

(11) Veröffentlichungsnummer: **0 235 772 B1**

(12) **EUROPÄISCHE PATENTSCHRIFT**

(45) Veröffentlichungstag der Patentschrift: **20.03.91**

(51) Int. Cl.5: **C08L 63/10**, C08F 299/02, C08G 59/04, C08G 59/17

(21) Anmeldenummer: **87102871.8**

(22) Anmeldetag: **28.02.87**

# (54) Elastomermodifizierte, härtbare Vinylesterharze.

(30) Priorität: **04.03.86 DE 3606950**

(43) Veröffentlichungstag der Anmeldung:
**09.09.87 Patentblatt 87/37**

(45) Bekanntmachung des Hinweises auf die Patenterteilung:
**20.03.91 Patentblatt 91/12**

(84) Benannte Vertragsstaaten:
**AT DE FR GB IT NL**

(56) Entgegenhaltungen:
**EP-A- 0 065 020**
**EP-A- 0 079 227**
**DE-A- 2 916 396**

(73) Patentinhaber: **BASF Aktiengesellschaft**
**Carl-Bosch-Strasse 38**
**W-6700 Ludwigshafen(DE)**

(72) Erfinder: **Roland, Peter, Dr.**
**Wildermuthstrasse 33**
**W-6700 Ludwigshafen(DE)**

**EP 0 235 772 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind härtbare Vinylesterharze, die zur Erhöhung der Zähigkeit durch Einbau von Polyoxybutyleneinheiten modifiziert wurden.

Ausgehärtete Formteile aus faserverstärkten Vinylesterharzen weisen vielfach eine hohe Sprödigkeit auf. Bei Stoß- oder Schlageinwirkung auf das Formteil kann dies zur Rißbildung in der Matrix führen. Risse können aber auch bereits während der Härtung auftreten, wenn diese zur Erzielung kurzer Zykluszeiten verhältnismäßig schnell durchgeführt wird. Eine solche Rißbildung hat zur Folge, daß bei mechanischer Beanspruchung keine optimale Krafteinleitung in die Matrix gewährleistet ist und daß aggresive Flüssigkeiten, die mit dem Formteil in Berührung kommen, in die Risse eindiffundieren und die Fasern schädigen können.

Zur Verbesserung der Zähigkeit und Verringerung der Rißanfälligkeit bei Härtung und Schlageinwirkung von Formteilen, wurde verschiedentlich vorgeschlagen, den Vinylesterformmassen Polydien-Kautschuke zuzusetzen. Da Kautschuke mit Vinylestern nicht mischbar sind, werden sie gewöhnlich, gegebenenfalls mit Hilfe eines Emulsionsstabilisators, in der styrolischen Lösung des Vinylesters emulgiert. Da diese Emulsionen jedoch nicht stabil sind und sich in kurzer Zeit entmischen, ist die Handhabung solcher Systeme schwierig. Entsprechende Formteile haben wegen der schlechten Kautschukverteilung ein niedriges mechanisches Eigenschaftsniveau und eine unregelmäßige Oberflächenstruktur.

In der EP-A 79 227 sind ungesättigte Polyesterharze beschrieben, die durch Zusatz niedermolekularer Reaktionsprodukte aus einem funktionelle Gruppen tragenden Butadien/Acrylnitril-Copolymeren und einem Epoxidharz elastomermodifiziert sind. Der Zusatz der beschriebenen niedermolekularen Kautschuke erniedrigt jedoch sehr stark die Wärmeformbeständigkeit von ausgehärteten Formteilen.

Aufgabe der Erfindung war daher die Herstellung von härtbaren Vinylesterharzen, die zu Formteilen mit erhöhter Schlagzähigkeit ausgehärtet werden können, die zuvor beschriebenen Nachteile aber nicht aufweisen. Insbesondere sollte eine homogene Verteilung der Elastomerkomponente in der Polymermatrix vorliegen, so daß die Formteile eine hohe Schlagzähigkeit, geringe Rißanfälligkeit, gute mechanische Eigenschaften und darüber hinaus eine gleichmäßige, glatte Oberfläche aufweisen. Ein besonderes Ziel war es, niedrigviskose elastomermodifizierte Vinylesterharze zu entwickeln, die über längere Zeit stabil sind und zur Herstellung von füllstoff-freien und füllstoff-armen glasfaserverstärkten Formteilen geeignet sind.

Diese Aufgabe wird erfindungsgemäß dadurch gelöst, daß man in die Molekülkette des Vinylesters butylen sequenzen, einbaut.

Gegenstand der Erfindung sind demzufolge härtbare Vinylesterharze, enthaltend.ein Gemisch aus

A. einem endständig ungesättigten Vinylester harz, welches Keine Polyoxybutyleneinheiten euthält,

B. ethylenisch ungesättigten, mit A copolymerisierbaren Monomeren,

C. 5 bis 95 Gew.-%, bezogen auf A + B, eines durch Einbau von Polyoxybutyleneinheiten modifizierten Vinylester harzes,

sowie gegebenenfalls

D. üblichen Initiatoren, Polymerisationsbeschleunigern, Inhibitoren, Gleitmitteln, inerten Lösungsmitteln, Füllstoffen, Verdickungsmitteln und schrumpfmindernden Zusätzen.

Die anspruchsgemäßen Vinylesterharze enthalten folgende Bestandteile:

A.

Unter endständig ungesättigten Vinylesterharzen im Sinne der Erfindung versteht man die Umsetzungsprodukte eines Polyepoxids mit einer ungesättigten Monocarbonsäure, vorzugsweise Methacrylsäure. Sie werden beispielsweise in den US-PS 3 066 112 und 3 179 623 beschrieben, wobei bevorzugt Vinylesterharze auf Basis von Bisphenol A zur Anwendung kommen. Aber auch aus Epoxy-Novolak-Harzen werden durch Umsetzung mit (Meth-)Acrylsäure Vinylesterharze erhalten, wie in der US-PS 3 256 226 beschrieben.

In Betracht kommen ferner modifizierte Vinylesterharze, beispielsweise solche gemäß US-PS 3 947 422, die Halbestergruppen enthalten und durch Reaktion der Hydroxylgruppe der Gruppierung $-CO-OCH_2-CHOH-CH_2-$ mit einem Dicarbonsäureanhydrid, z.B. dem Anhydrid der Maleinsäure, Citraconsäure, Phthalsäure, Tetrabromphthalsäure u.a. erhalten werden.

Die erfindungsgemäßen härtbaren Polyesterformmassen enthalten im allgemeinen 20 bis 90, vorzugsweise 30 bis 80 Gew.-% an Komponente A, bezogen auf das Gesamtgewicht der Komponenten A + B.

B.

Als copolymerisierbare, ethylenisch ungesättigte monomere Verbindungen kommen die üblicherweise zum Herstellen ungesättigter Vinylesterharze verwendeten Allyl- und vorzugsweise Vinylverbindungen in Frage, z.B. Vinylaromaten, wie Styrol; substituierte Styrole, wie p-Chlorstyrol oder Vinyltoluol; Ester der

Acrylsäure und Methacrylsäure mit 1 bis 18 Kohlenstoffatome enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide; Allylester, wie Diallylphthalat; ferner Vinylester wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, α-Methylstyrol, Chlorstyrol, Vinyltoluol, Divinylbenzol und Diallylphthalat.

C.

Durch Einbau von Polyoxybutyleneinheiten modifizierte Vinylesterharze erhält man durch Umsetzung von einem Mol eines hydroxylterminierten Polyoxybutylens mit etwa zwei Molen eines Polyepoxids, wie beispielsweise des Diglycidylethers von Bisphenol A. Das Reaktionsprodukt wird anschließend mit einer ungesättigten Monocarbonsäure, wie beispielsweise Acryl- oder Methacrylsäure verestert und in einem copolymerisationsfähigen Vinylmonomeren B gelöst.

Als Polyepoxide können z.B. die Polyglycidylether mehrwertiger Alkohole und Phenole mit Epoxidäquivalentgewichten von 150 bis 1000, vorzugsweise von 150 bis 600 eingesetzt werden. Bevorzugt werden die Diglycidylether von Bisphenol A oder die Polyglycidylether von Novolaken verwendet, die durchschnittlich von zwei bis acht Phenoleinheiten pro Molekül aufweisen.

Die verbesserte Schlagzähigkeit der härtbaren Polyesterharze wird dadurch erreicht, daß die genannten Polyepoxide mit einem Oxybutyleneinheiten enthaltenden Diol umgesetzt werden. Die Herstellung und Eigenschaften solcher Diole sind z.B. in "Advances in Polymer Science", Band 68/69, II., Seite 79 - 90 beschrieben. Das Polyoxybutylen wird oft auch als Polytetrahydrofuran oder abgekürzt Poly-THF bezeichnet und kann durch folgende Formel wiedergegeben werden:

$$HO{-}CH_2{-}CH_2{-}CH_2{-}CH_2{-}\left(O{-}CH_2{-}CH_2{-}CH_2{-}CH_2{-}\right)_n OH$$

wobei n vorzugsweise eine ganze Zahl zwischen 6 und 40 ist. Neben dem Polyoxybutylen selbst kommt als elastomermodifizierende Diolkomponente auch dessen p-Hydroxybenzoesäure-Ester in Frage:

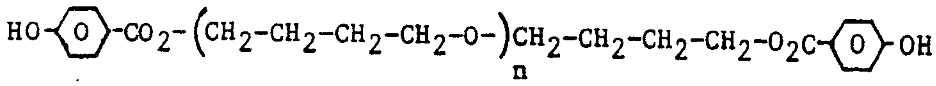

Die im Rahmen der Erfindung bevorzugten Polyoxybutylene haben durchschnittliche Molekulargewichte ($M_n$) von 600 bis 3000 (OH-Zahlen von 185 bis 36).

Geeignete Katalysatoren für die Umsetzung des hydroxylterminierten Polyoxybutylens mit den Epoxiden sind Lewis-Basen, wie tertiäre Amine, Phosphine sowie Ammonium- und Phosphoniumverbindungen.

Die Umsetzungsprodukte - dargestellt am Beispiel des Bisphenol A Diglycidylethers - lassen sich somit durch folgende Formel beschreiben:

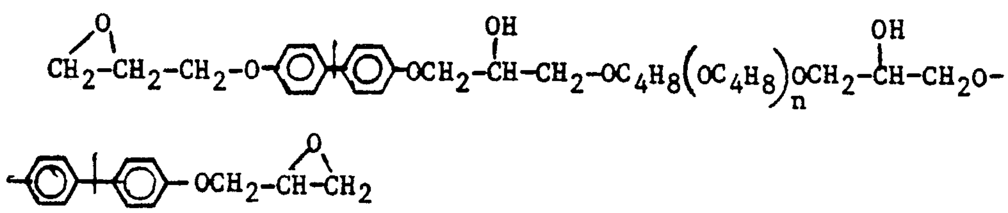

(n = 6-40)

Durch Veresterung dieser Umsetzungsprodukte mit (Meth)-Acrylsäure werden die modifizierten Vinylester erhalten. Sie werden anschließend den Standardvinylesterharzen A und copolymerisationsfähigen Monomeren B in Mengen von 5 bis 95 Gew.-%, bezogen auf A + B, zugemischt. Dabei werden in jedem Fall völlig mischbare Systeme erhalten. Durch Zumischen der elastomermodifizierten Vinylesterharze wird die Glastemperatur in ausgehärteten Proben nur geringfügig abgesenkt, während die Schlagzähigkeiten ansteigen.

D.

Übliche Polymerisationsinitiatoren sind Peroxide oder andere in der Wärme Radikale bildende organische Verbindungen in Mengen von z.B. 0,05 bis 5 Gew.-%, vorzugsweise von 0,1 bis 3 Gew.-%, bezogen auf das Gesamtgewicht der Komponenten A + B. Als Radikale liefernde Initiatoren seien beispielhaft genannt: Benzoylperoxid, tert.-Butylperoctoat, tert.-Butylperbenzoat, Cyclohexanonperoxid, tert.-Dibutylperoxid und Hydroperoxide, ferner Azoverbindungen, wie Azodiisobutyronitril oder organische Verbindungen mit einer labilen Kohlenstoff-Kohlenstoff-Bindung.

Setzt man den peroxid-initiierten Formmassen übliche Polymerisationsbeschleuniger, wie z.B. Co-, Mn-, Sn- oder Ce-Salze organischer Säuren oder Amine, wie N,N-Dimethylanilin oder N,N-Diethylanilin zu, dann kann die Härtung auch ohne Temperaturerhöhung durchgeführt werden, wenn Hydroperoxide, bzw. Benzoylperoxid zum Einsatz kommen. Bei Verwendung üblicher Lichtinitiatoren, wie z.B. Benzoinether, Benzilketalen oder Acylphosphinverbindungen kann die Härtung durch Bestrahlen mit Licht der Wellenlänge 200 bis 500 nm durchgeführt werden.

Als Inhibitoren kommen die üblichen in Frage wie z.B. Hydrochinon, 2,6-Dimethylhydrochinon, tert.-Butylbrenzkatechin, p-Benzochinon, Chloranil, 2,6-Dimethylchinon, Nitrobenzole, wie m-Dinitrobenzol, Thiodiphenylamin oder Salze von N-Nitroso-N-cyclohexylhydroxylamin sowie deren Gemische. Die Inhibitoren sind in den Formmassen im allgemeinen in einer Menge von 0,005 bis 0,2, vorzugsweise 0,01 bis 0,1 Gew.-%, bezogen auf die Komponenten A + B, enthalten.

Als weiterhin gegebenenfalls mitzuverwendende inerte Lösungsmittel kommen Ketone, Ester, Kohlenwasserstoffe in Mengen bis zu 100 Gew.-%, bezogen auf A + B, in Frage.

Als Gleitmittel kommen beispielsweise Zink-, Magnesium- und Calciumstearat sowie Polyalkylenetherwachse in Betracht.

Geeignete Füllstoffe sind z.B. übliche feinpulverige oder körnige anorganische Füllstoffe, wie Kreide, Kaolin, Quarzmehl, Dolomit, Schwerspat, Metallpulver, Zement, Talkum, Kieselgur, Holzmehl, Holzspäne, Pigmente und dergleichen. Als Verstärkungsfasern kommen solche aus Glas, Kohlenstoff oder aromatischem Polyamid in Frage. Sie werden z.B. in Mengen von 20 bis 200 Gew.-%, bezogen auf A + B, eingesetzt.

Als Verdickungsmittel seien beispielsweise Erdalkalioxide, wie Calciumoxid, Calciumhydroxid, Magnesiumhydroxid und vorzugsweise Magnesiumoxid sowie Gemische dieser Oxide bzw. Hydroxide genannt. Diese können auch teilweise durch Zinkoxid ersetzt sein. Auch Polyisocyanate sind in manchen Fällen geeignet. Die Verdickungsmittel können den Formmassen z.B. in Mengen von 0,5 bis 5 Gew.-%, bezogen auf A + B, zugesetzt werden.

Die erfindungsgemäßen härtbaren Vinylesterharze können zu Formteilen mit guter Schlagzähigkeit ausgehärtet werden.

## Beispiele

### Ansatz C 1: Umsetzung von® Epikote 828 mit Poly-THF (Mn = 650 g/mol)

0,205 Mol (R)Epikote 828 (Diglycidylether von Bisphenol A der Fa. SHELL) wurden bei 90 °C mit 0,077 Mol Poly-THF (Mn = 650) in Gegenwart von 18 mMol Triphenylphosphin als Katalysator und 1000 ppm Hydrochinon als Inhibitor umgesetzt. Nach etwa 2 1/2 Std. war die Reaktion vollständig abgelaufen (Epoxidwert 0,222), und das entstandene Diepoxid wurde bei ebenfalls 90 °C mit 0,255 Mol Methacrylsäure bis zu einem Epoxidwert von 0,027 verestert. Das Reaktionsprodukt wurde anschließend mit 40 Gew.-% Styrol verdünnt. Nach Zusatz von 2 % t-Butylperbenzoat und anschließender Warmverpressung kann daraus ein sehr flexibles Formstück mit eine Glastemperatur von 95 °C erhalten werden.

### Ansatz C 2: Umsetzung von® Epikote 828 mit Poly-THF (Mn = 1000 g/Mol)

0,723 Mol® Epikote 828 wurden bei 100 °C mit 0,136 Mol Bisphenol A und 0,136 Mol Poly-THF (Mn = 1000) in Gegenwart von 16 mMol Triphenylphosphin und 1000 ppm Hydrochinon zum modifizierten Diepoxid umgesetzt. Nach 2 1/2 Std. wurden 0,90 Mol Methacrylsäure zudosiert. Nach einer weiteren Reaktionszeit von 5 Std. wurde die Umsetzung bei einem Epoxidwert von 0,024 durch Zugabe von 40 Gew.-% Styrol beendet. Die Glastemperatur des Formstücks beträgt 90 °C.

Ansatz C 3: Umsetzung von® Epikote 828 mit Poly-THF-bis-(p-hydroxybenzoat)

0,20 Mol® Epikote 828 wurden bei 105 °C mit 0,071 Mol Bisphenol A und 0,005 Mol Poly-THF-bis-(p-hydroxybenzoat) - hergestellt aus Poly-THF (Mn = 650 g/mol) und Ethyl-p-hydroxybenzoat - in Gegenwart von 1,5 mMol Triphenylphosphin und 1000 ppm Hydrochinon umgesetzt. Man ließ bis zu einem Epoxidwert von 0,266 reagieren, bevor 0,25 Mol Methacrylsäure hinzugefügt wurden. Nach 4 Std. 40 Min. war der Epoxidwert auf 0,028 zurückgegangen, und 40 Gew.-% Styrol wurden zulaufen lassen. Die Glastemperatur der ausgehärteten, sehr flexiblen Harzplatte beträgt 130 °C.

Beispiel 1

Abmischung eines Standard-Vinylesters mit Harz nach Beispiel 1

Die in Ansatz C 1 hergestellte Harzmischung wurde mit einem Vinylesterharz auf Basis Bisphenol A ((R)-Palatal A 430, BASF AG) in unterschiedlichen Mengen vermischt (Angaben in Gew.-%) und mit 2 % tert.-Butylperbenzoat zu 4 mm dicken Platten ausgehärtet. Die Schlagzähigkeiten wurden nach DIN 53 453 mit einem Pendelschlagwerk bestimmt. Die Glastemperaturen ($T_G$) wurden nach der Torsionsschwingungsmethode ermittelt:

| Abmischungsverhältnis ~~A : C~~ | $T_G$ °C | Schlagzähigkeit kg/m² |
|---|---|---|
| 100 : 0 (Vergleich) | 135 | 16,7 |
| 95 : 5 | 130 | 21,9 |
| 90 : 10 | 124 | 31,4 |
| 85 : 15 | 118 | 37,6 |
| 80 : 20 | 110 | 31,5 |

In gleicher Weise können die Schlagzähmodifizierungsmittel nach den Ansätzen C 2 und C 3 mit Vinylesterharzen abgemischt werden.

Beispiel 2

Abmischung eines Novolak-Vinylesterharzes mit Beispiel 1.

Ein durch Umsetzung eines epoxidierten Novolaks mit Methacrylsäure hergestelltes und mit 40 Gew.-% Styrol verdünntes Vinylesterharz wurde in verschiedenen Mengenverhältnissen mit dem in Ansatz C 1 hergestellten Harz vermischt und nach Zusatz von 2 % tert.-Butylperbenzoat zu Platten ausgehärtet:

| Abmischungsverhältnis ~~A : C~~ | $T_G$ °C | Schlagzähigkeit (Skalenteile) |
|---|---|---|
| 100 : 0 (Vergleich) | 175 | 0,8 |
| 90 : 10 | 171 | 1,2 |
| 85 : 15 | 165 | 2,6 |
| 80 : 20 | 162 | 1,1 |

## Ansprüche

1. Härtbare Vinylesterharze, enthaltend ein Gemisch aus
   A. einem endständig ungesättigten Vinylester harz, welches Keine Polybutyleneinheiten enthält,
   B. ethylenisch ungesättigten, mit A copolymerisierbaren Monomeren,
   C. 5 bis 95 Gew.-%, bezogen auf A + B, eines durch Einbau von Polyoxybutyleneinheiten modifizierten Vinylester harzes, sowie gegebenenfalls
   D. üblichen Initiatoren, Polymerisationsbeschleunigern, Inhibitoren, Gleitmitteln, inerten Lösungsmitteln, Füllstoffen, Verstärkungsfasern, Verdickungsmitteln und schrumpfmindernden Zusätzen.

2. Härtbare Vinylesterharze nach Anspruch 1, dadurch gekennzeichnet , daß die Komponente C ein Ester einer ungesättigten Monocarbonsäure mit einem Umsetzungsprodukt aus einem Mol eines hydroxylterminierten Polyoxybutylens mit etwa zwei Molen eines Polyepoxids ist.

3. Härtbare Vinylesterharze nach Anspruch 2, dadurch gekennzeichnet , daß als hydroxylterminierte Polyoxybutylene solche der Formel

$$HO-CH_2-CH_2-CH_2-CH_2-(O-CH_2-CH_2-CH_2-CH_2-)_nOH$$

oder

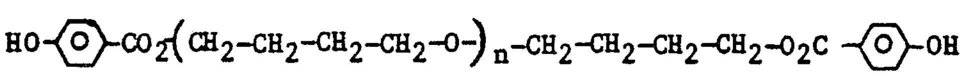

mit n = 6 bis 40
eingesetzt werden.

4. Härtbare Vinylesterharze nach Anspruch 2, dadurch gekennzeichnet , daß als Polyepoxid der Diglycidylether von Bisphenol A oder der Polyglycidylether eines Novolaks eingesetzt wird.

5. Verwendung der härtbaren Vinylesterharze nach Anspruch 1 zur Herstellung von gegebenenfalls faserverstärkten Formteilen.

## Claims

1. A curable vinyl ester resin containing a mixture of
   A. a terminally unsaturated vinyl ester resin which contains no polybutylene units,
   B. an ethylenically unsaturated monomer which is copolymerizable with A,
   C. from 5 to 95 % by weight, based on A + B, of a vinyl ester resin modified through incorporation of polyoxybutylene units, and optionally
   D. customary initiators, polymerization accelerants, inhibitors, lubricants, inert solvents, fillers, reinforcing fibers, thickeners and shrinkagereducing additives.

2. A curable vinyl ester resin as claimed in claim 1, wherein component C is an ester of an unsaturated monocarboxylic acid with a reaction product of one mole of a hydroxyl-terminated polyoxybutylene with about two moles of a polyepoxide.

3. A curable vinyl ester resin as claimed in claim 2, wherein the hydroxyl-terminated polyoxybutylene has the formula

$$HO-CH_2-CH_2-CH_2-CH_2-(O-CH_2-CH_2-CH_2-CH_2-)_nOH$$

or

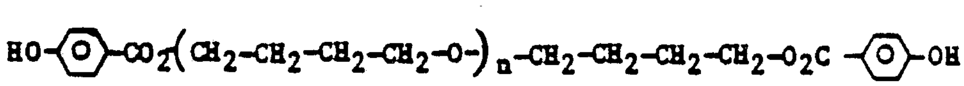

where n is from 6 to 40.

4. A curable vinyl ester resin as claimed in claim 2, wherein the polyepoxide used is the diglycidyl ether of bisphenol A or the polyglycidyl ether of a novolak.

5. The use of a curable vinyl ester resin as claimed in claim 1 for producing a molding with or without fiber reinforcement.

## Revendications

1. Résines d'ester vinylique durcissables, contenant un mélange
   A. d'une résine d'ester vinylique non saturée en fin de chaîne qui ne contient pas de motifs polybutylène,
   B. de monomères insaturés éthyléniquement, copolymérisables avec A,
   C. de 5 à 95% en poids, par rapport à A+B, d'une résine d'ester vinylique modifiée par incorporation de motifs polyoxybutylène, et éventuellement
   D. d'initiateurs, accélérateurs de polymérisation, inhibiteurs, lubrifiants, solvants inertes, cnarges, fibres de renfort, épaississants et additifs antirétraction usuels.

2. Résines d'ester vinylique durcissables selon la revendication 1, caractérisées en ce que le composant C est un ester d'un acide monocarboxylique insaturé et d'un produit de réaction de 1 mol d'un polyoxybutylène comportant des groupements hydroxy en fin de chaîne et d'environ 2 mol d'un polyépoxyde.

3. Résines d'ester vinylique durcissables selon la revendication 2, caractérisées en ce qu'il est utilisé, comme polyoxybutylènes comportant des groupements hydroxy en fin de chaîne, des composés de formule

$$HO\text{-}CH_2\text{-}CH_2\text{-}CH_2\text{-}CH_2\text{-}(O\text{-}CH_2\text{-}CH_2\text{-}CH_2\text{-}CH_2\text{-})_nOH$$

ou

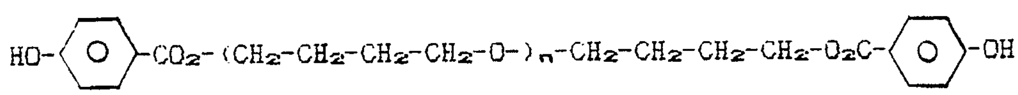

avec n = 6 à 40.

4. Résines d'ester vinylique durcissables selon la revendication 2, caractérisées en ce qu'il est utilisé, comme polyépoxyde, le diglycidyléther de bisphénol A ou le polyglycidyléther d'une novolaque.

5. Utilisation des résines d'ester vinylique durcissables selon la revendication 1 pour la fabrication de pièces moulées éventuellemen renforcées de fibres.